# EUROPEAN PATENT SPECIFICATION

(11) **EP 3 177 508 B1**
(45) Date of publication and mention of the grant of the patent: **26.10.2022**
(21) Application number: 15745228.5
(22) Date of filing: 05.08.2015
(51) Int. Cl.: B62D 25/12, B62D 35/00, B62D 37/02

(54) **MODIFYING AERODYNAMIC PERFORMANCE OF A VEHICLE**
MODIFIZIERUNG DER AERODYNAMISCHEN LEISTUNG EINES FAHRZEUGS
MODIFICATION DES PERFORMANCES AÉRODYNAMIQUES D'UN VÉHICULE

(30) Priority: 05.08.2014 GB 201413849
(43) Date of publication of application: 14.06.2017
(73) Proprietor: Jaguar Land Rover Limited, Coventry, Warwickshire CV3 4LF (GB)
(72) Inventor: LEGRICE, Oliver, Coventry Warwickshire CV3 4LF (GB); GAYLARD, Adrian, Coventry Warwickshire CV3 4LF (GB); THOMPSON, Christopher, Coventry Warwickshire CV3 4LF (GB); TURNER, Ross, Coventry Warwickshire CV3 4LF (GB)
(74) Representative: Holmes, Matthew William
(86) International application number: PCT/EP2015/068026
(87) International publication number: WO 2016/020419

(56) References cited:
- GB-A- 2 003 801
- JP-U- H0 232 482
- US-A- 4 379 582
- US-A1- 2003 178 870

## Description

### TECHNICAL FIELD

Aspects of the present disclosure relates to modifying aerodynamic performance of a vehicle. Aspects of the disclosure also relate to a bonnet for a vehicle and to a control unit.

### BACKGROUND

Aerodynamics plays a key role in the design of vehicles, such as motor or road vehicles (vehicles, vans, trucks, etc.). Particular attention is paid to the aerodynamic drag force, as it directly affects fuel consumption and greenhouse gas emissions (notably CO₂). Various vehicle components are accordingly designed so as to optimise the aerodynamic performance of a vehicle.

For example, spoilers (i.e. devices positioned at specific locations about a vehicle, such as at the rear of a vehicle, on top of the boot or roof of the vehicle, and/or at the front bumper of the vehicle) are common place and can be used to channel air flow around and/or into a vehicle as well as reduce the aerodynamic lift force, or even generate a negative (downwards) force (which may aid vehicle stability and handling, particularly at high speeds and/or during cornering). The spoilers can act to effectively reduce unsteady air movement (such as turbulence) across the body of the vehicle when in motion and by doing so, improve aerodynamic performance.

JPH0232482 depicts a bonnet for a vehicle having a channel therein towards its front edge having a converging flow path.

It is an aim of the present invention to improve aerodynamic performance of a vehicle.

### SUMMARY OF THE INVENTION

Aspects of the invention relate to a bonnet for a vehicle having a bypass duct; and to a vehicle having a bonnet incorporating a bypass duct, and to a control unit for a vehicle.

According to another aspect of the present invention, there is provided a bonnet for a vehicle, the bonnet comprising: a front edge and a rear edge; a recessed longitudinal channel being formed in said bonnet and extending from said front edge towards the rear edge; and an airflow modification device disposed transversely across the longitudinal channel for controlling airflow over the bonnet, wherein the airflow modification device and the recessed channel form a conduit, the conduit having a cross-sectional area which is diverging as the conduit extends towards the rear edge. The recessed longitudinal channel thereby forms a duct for taking air from the front of the vehicle, below the bonnet line, and passing it internally behind the airflow modification device and venting it onto a surface of the bonnet. The recessed longitudinal channel thereby forms a bypass vent. The airflow modification device can define a bonnet leading edge.

Advantageously, a movable element of the bonnet arrangement, whether that be a flap disposed on the bonnet/member itself, and/or the airflow modification device, and/or the bonnet itself, can be moved in order to change the cross-sectional area.

The flap and/or the airflow modification device and/or at least a portion of the bonnet may be movable by one or more actuators to change the cross-sectional area.

The flap and/or the airflow modification device and/or at least a portion of the bonnet may be movable between an un-deployed configuration and at least one deployed configuration.

The airflow modification device therefore causes airflow at a front side of the vehicle (in particular, when the vehicle is travelling) to be substantially directed along the recessed longitudinal channel so that the airflow can be controlled over the bonnet. This controlling of airflow reduces the size of the zone of high pressure which forms on the front of a moving vehicle and also reduces the losses associated with airflow over the bonnet leading edge, resulting in a reduced aerodynamic drag force. At least in certain embodiments, the recessed longitudinal channel can provide a more aerodynamically efficient flow path for air that would have been forced to flow over the bonnet leading edge. The recessed longitudinal channel has an inlet which can be disposed above a front stagnation zone and below the airflow modification device. An internal flow path ducts the flow under the airflow modification device and vents it onto the bonnet surface. The recessed longitudinal channel may be formed by the bonnet surface and the airflow modification device. In an alternative arrangement, a bypass duct may be formed by a structure, such as a channel or conduit, which sits below the bonnet. The side profile of the vehicle may be aesthetically, rather than aerodynamically optimized.

The longitudinal channel may have a front section and a rear section; wherein the airflow modification device may be disposed transversely across said front section of the longitudinal channel. The airflow modification device is thus positioned towards the front of the vehicle bonnet so as to modify airflow prior to the airflow travelling along the bonnet. The front section of the longitudinal channel can be oriented to direct airflow upwardly. In certain embodiments, the airflow modification device can be inclined such that the incident airflow is directed towards the top of the vehicle windscreen or over the roof of the vehicle.

The said front section may comprise a substantially continuous surface for guiding airflow over the bonnet. The substantially continuous surface means that the surface is devoid of any apertures or air inlets and thus the airflow is controlled over and around the bonnet as opposed to flowing into the engine bay.

The bonnet may comprise left and right side portions which define the respective sides of the bonnet. The left and right side portions of the bonnet can define the lateral sidewalls of the longitudinal channel. The airflow modification device can extend between said left and right side portions.

The airflow modification device and the recessed channel can form a conduit which is open at each end to form an inlet and an outlet. The inlet is open towards the front of the vehicle so that air is entrained into the conduit when the vehicle is travelling in a forwards direction. The conduit has a cross-sectional area which is diverging as it extends towards the rear of the bonnet. As such, the conduit acts to decelerate the airflow over the bonnet surface.

The airflow modification device may comprise one or more flaps. The flaps can be either fixed at a predefined angle relative to a horizontal plane, or being movable relative to a horizontal plane. The movable flaps can therefore act to change how the airflow moves over and around the bonnet, therefore changing the aerodynamic efficiency of the vehicle.

The airflow modification device can comprise an aerofoil.

The bonnet can comprise a hinge element.

According to a further aspect of the present invention, there is provided a control unit for a vehicle, configured to transmit in dependence on at least one operating parameter of the vehicle a control signal to cause, at least in part, the movement of the flap and/or the airflow modification device and/or the at least a portion of the bonnet as described herein.

According to a further aspect of the present invention there is provided a vehicle comprising the bonnet as described herein.

Within the scope of the appended claims it is expressly intended that the various aspects, embodiments, examples and alternatives set out in the preceding paragraphs, and/or in the following description and drawings, and in particular the individual features thereof, may be taken independently or in any combination. That is, all embodiments and/or features of any embodiment can be combined in any way and/or combination, unless such features are incompatible..

### BRIEF DESCRIPTION OF THE DRAWINGS

One or more embodiments of the invention will now be described, by way of example only, with reference to the accompanying drawings, in which:
Figure 1a is a front perspective view of a vehicle incorporating a deployable closure panel in a retracted position in accordance with an embodiment of the present invention;
Figure 1b is a front perspective view of the vehicle shown in Figure 1a with the deployable closure panel in a deployed position in accordance with an embodiment of the present invention;
Figure 2 is a schematic block diagram of a control system in accordance with an embodiment of the present invention;
Figure 3a is a front perspective view of a vehicle incorporating a deployable closure panel in a retracted position in accordance with an embodiment of the present invention;
Figure 3b is a front perspective view of the vehicle shown in Figure 3a with the deployable closure panel in a deployed position in accordance with an embodiment of the present invention;
Figure 3c is a side profile view of the vehicle shown in Figures 3a and 3b with the deployable closure panel in a retracted position in accordance with an embodiment of the present invention;
Figure 3d is a side profile view of the vehicle shown in Figures 3a, 3b and 3c with the deployable closure panel in a deployed position in accordance with an embodiment of the present invention;
Figure 4a is a front perspective view of a vehicle bonnet incorporating an aerofoil in accordance with an embodiment of the present invention;
Figure 4b is a side cross-sectional view of the vehicle bonnet and aerofoil of Figure 4a in accordance with an embodiment of the present invention;
Figure 4c is a side cross-sectional view of the vehicle bonnet and aerofoil of Figures 4a and 4b in accordance with an embodiment of the present invention, showing an example of the airflow over the vehicle bonnet;
Figure 4d is an exploded cross-sectional view of the aerofoil of Figures 4a, 4b and 4c in accordance with an embodiment of the present invention, showing an example of the airflow over the vehicle bonnet;
Figures 5a to 7b are schematic diagrams showing alternative arrangements of the aerofoil of Figures 4a to 4d on a vehicle bonnet; and
Figures 8a to 8c are side cross-sectional views of the vehicle bonnet and the aerofoil of Figure 4a in different configurations.

### DETAILED DESCRIPTION

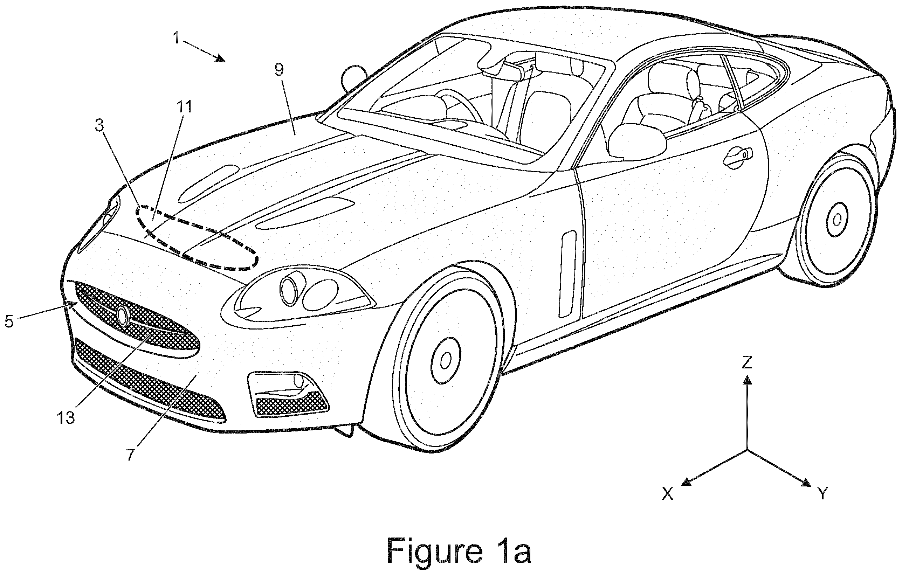

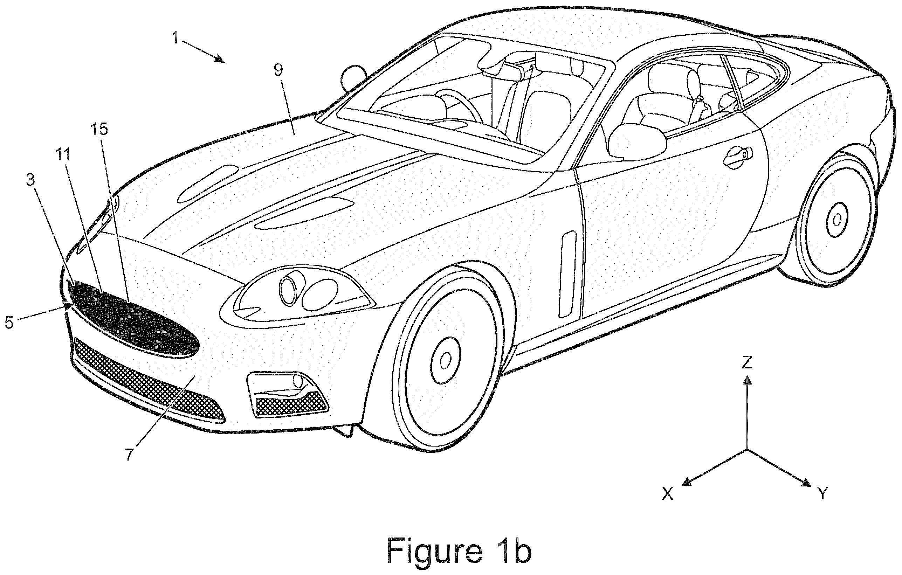

A vehicle 1 comprising a deployable closure panel 3 for an air inlet 5 of the vehicle 1 is illustrated in Figures 1a and 1b. Figure 1a shows the closure panel 3 positioned in a retracted position (away from the air inlet 5) and Figure 1b shows the closure panel 3 positioned in a deployed position (so that the closure panel 3 substantially closes the air inlet 5).

In more detail, Figure 1a shows a vehicle 1 which is an automobile having a coupe configuration. The vehicle 1 comprises a closure panel 3, an air inlet 5, a front bumper 7 and a bonnet 9. In particular, the air inlet 5 is defined by an opening in the front bumper 7 of the vehicle 1, which allows air from outside of the vehicle to be channelled towards an engine bay (not shown) of the vehicle 1. The engine bay is at least partly covered by the bonnet 9 and houses an internal combustion engine. The engine could contain an electric machine or a combination of an internal combustion engine and an electric machine. The channelling of air from outside the vehicle, via the air inlet 5 to the engine bay therefore allows, for example, a cooling of engine components housed within the engine bay. A grille 13 (often called a radiator grille due to the design and positioning of the associated air inlet 5 allowing airflow to cool a radiator housed by the engine bay) is positioned within the air inlet 5 and acts to filter unwanted objects such as leaves and stones from entering the engine bay.

The closure panel 3 is shown by a dashed line to indicate that it is hidden from view beneath the bonnet 9. In particular, the closure panel 3 is located in a retracted position within the vehicle 1, whereby it is spaced at a distance away from the air inlet 5 so that it does not interrupt airflow via the air inlet 5 to the engine bay. The closure panel 3 is sized and shaped so that it can close the air inlet 5 to inhibit, reduce or otherwise substantially prevent airflow via the air inlet 5 to the engine bay. The closure panel 3 thus comprises a continuous (uninterrupted) outer surface 11 so that air cannot pass through the closure panel 3. The outer surface 11 is front facing in the present embodiment. In this example, the opening defining the air inlet 5 is substantially elliptical. Accordingly, the closure panel 3 has a substantially elliptical shape so that the outside edges of the closure panel locate proximal to (or abut against) the inner edges of the air inlet 5 when the closure panel 3 is positioned within the air inlet 5.

Figure 1b depicts the closure panel 3 in a deployed configuration, whereby the closure panel 3 is arranged to substantially close the air inlet 5. The closure panel 3 thereby functions as a blanking panel at least substantially to close the air inlet 5. More particularly, the closure panel 3 is constructed and arranged to fit the air inlet 5 so that its outer surface 11 is flush with at least one external surface 15 of the front bumper 7. In this manner, the outer surface 11 of the closure panel 3 substantially aligns with at least one external surface 15 of the front bumper 7 around the air inlet 5. In doing so, the closure panel 3 forms a part of the vehicle's external surface around the vehicle 1 (known as the "A-surface" of the vehicle 1), which defines the external vehicle contour. The resulting composite surface, formed by the outer surface 11 of the closure panel 3 and the at least external surface 15 of the front bumper 7, forms a substantially continuous exterior surface. The closure panel 3 in its deployed position acts to substantially redirect airflow around the front bumper 7 so that the airflow via the air inlet 5 is inhibited.

In operation, the closure panel 3 is moved between the retracted position (shown in Figure 1a) and the deployed position (shown in Figure 1b). Accordingly, the movement from the retracted position to the deployed position acts to modify the vehicle's A-surface and hence fluid flow in and around the vehicle 1. The closure panel 3 may be initialised (e.g. when the vehicle 1 is switched off or otherwise not running) at a default position which may either be the retracted position or the deployed position.

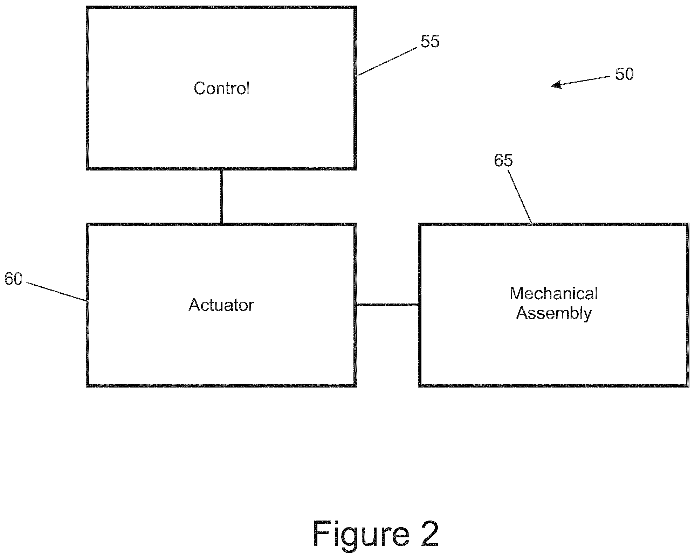

The operation of the closure panel 3 will now be described in more detail with reference to Figure 2. For simplicity of explanation, the following example assumes that the default configuration is in the retracted configuration but it will be understood that the default configuration may be initialised in either of the retracted configuration or the deployed configuration.

A control system 50 is provided within the vehicle 1 for controlling deployment of the closure panel 3. The control system 50 comprises a control means 55, an actuation means and a mechanical assembly 65. The control means 55 may be a control module of a vehicle (not shown), a computer, a processing module, and so forth. As such, the control means 55 may comprise one or more processors, one or more memories and/or logic circuitry and may be capable of executing computer program code. The actuation means is in communication with the control means 55 and may be any form of actuator 60 suitable for moving the closure panel 3 into one of a deployed position and a retracted position. The actuator 60 may, for example, comprising a pneumatic piston, an hydraulic piston, an electric motor, and so forth. The mechanical assembly 65 is in communication with the actuator 60 and accommodates the deployment and retraction of the closure panel 3 in the different positions. Accordingly, the mechanical assembly 65 may comprise devices to enable the necessary rotation and/or translation of the closure panel 3.

The actuator 60 receives a control signal from the control means 55 to deploy the closure panel 3 to the deployed position. At least in certain embodiments, the control means 55 can be configured to deploy the closure panel 3 progressively to control the proportion of the air inlet 5 which is closed. Responsive to, or based on the control signal received from the control means 55, the actuator 60 causes the mechanical assembly 65 to move the closure panel 3 to the deployed position so that the closure panel 303 effectively seals or closes the air inlet 5. At any point thereafter, the actuator 60 may receive a subsequent control signal indicating that the closure panel 3 should be retracted from the air inlet 5 and accordingly instructs the mechanical assembly 65 to move the closure panel 3 to its retracted position away from the air inlet 5.

In the example of Figure 1a and 1b, the control system 50 for the deployment and retraction of the closure panel 3 is dependent on the speed of the vehicle when travelling. Accordingly, the closure panel 3 is only deployed when it has been determined by the control system 50 that the vehicle 1 is travelling at a current speed that is above a predetermined speed threshold. For example, the closure panel 3 may be deployed after the vehicle 1 has been determined to exceed a predetermined speed threshold of either 30 kilometres per hour (kmph), 40kmph, 50kmph, 60kmph or 70kmph. If it is determined that the current vehicle speed has fallen below the predetermined speed threshold when the closure panel 3 is in its deployed position, the control system 50 then enables the closure panel 3 to be moved to its retracted position. It will be understood that varying levels of performance may be achieved for closure panel deployment for different vehicles at different speeds and that the predetermined speed threshold at which the closure panel should be deployed is chosen so that the relevant vehicle has improved aerodynamic efficiency at and above that speed.

In the illustrated arrangement of Figures 1a and 1b, the vehicle 1 is shown to have a coupe configuration, however it will be appreciated that the closure panel 3 can be used in other vehicle configurations. For example, the vehicle 1 can be an off-road vehicle or a sports utility vehicle.

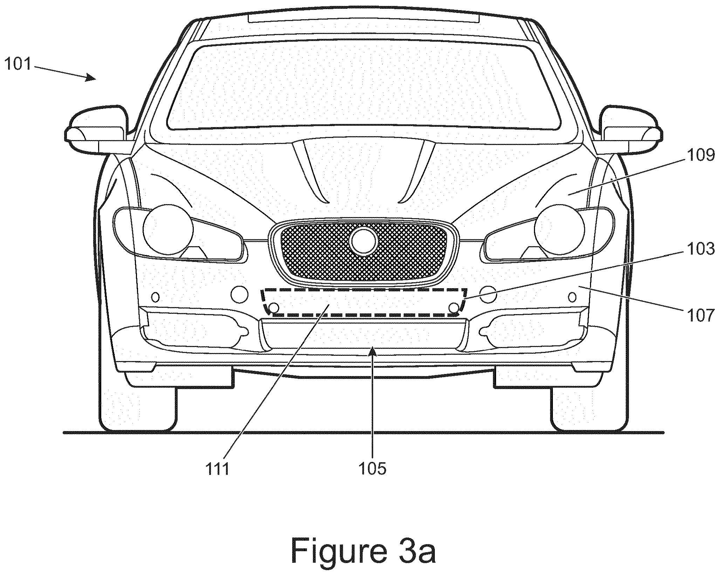

Figures 3a to 3d show a vehicle 101 having a saloon (sedan) configuration. Like reference numerals are used to those shown in Figures 1a and 1b but increased by one hundred, in order to depict like elements. In this example, the air inlet 105 is associated with a front bumper skirt grille (not shown) of the vehicle 101 rather than the air inlet 5 associated with the radiator grille 13 as described with reference to Figures 1a and 1b. The air inlet 105 is used to channel cooling air towards vehicular components (such as those housed within the engine bay of the vehicle 101).

Figure 3a shows a front view of the vehicle 101 having a closure panel 103 located in a retracted position. The closure panel 103 is depicted by dashed lines to show that it is hidden from view within the front bumper skirt 107 and above the air inlet 105. Consequently, in the retracted position, the air inlet 105 associated with the closure panel 103 is exposed so as to enable cooling airflow to be channelled towards the vehicular components for which the air inlet 105 is designed.

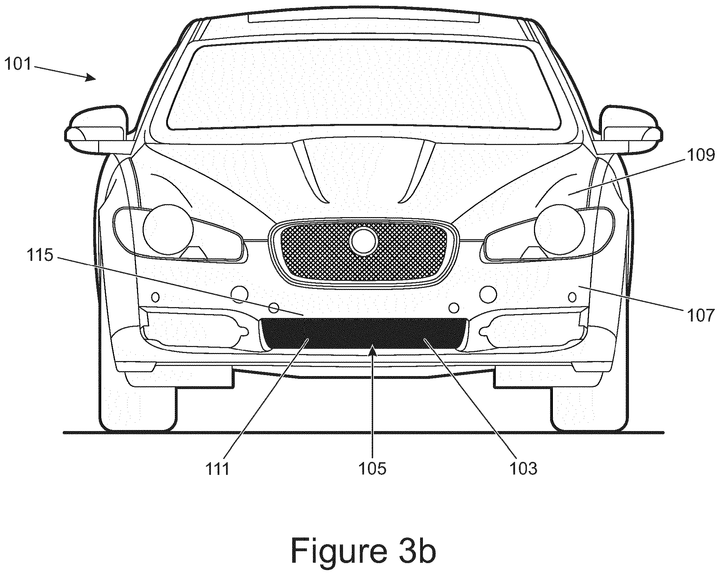

Figure 3b shows the vehicle 101 of Figure 3a with the closure panel 103 located in the deployed position. The closure panel 103 is sized and shaped so as to substantially close the air inlet 105 and thereby inhibit air flow via the air inlet 105 to the vehicular components. In particular, the air inlet 105 is substantially trapezoid-shaped with the greatest length on a top side of the air inlet 105 and is symmetrical about a vertical axis. The closure panel 103 therefore has the same shape as the air inlet 105 so that its outer edges are arranged to fit within the inside edges of the air inlet 105 when the closure panel 103 is in its deployed position. The closure panel 103 has a continuous front facing surface so as to prevent air from passing through the closure panel 103.

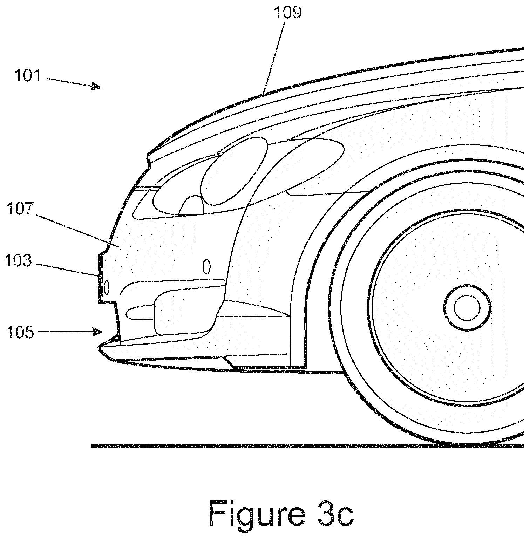

Figure 3c shows a cross-sectional side view of the vehicle 101 having the closure panel 103 located in the retracted position so that it does not interfere with the airflow via air inlet 105. The front bumper skirt 107 of the vehicle 101 has a recessed side profile, which defines at least part of the air inlet 105. When the vehicle 101 is travelling, cooling air can be channelled via the air inlet 105 to the appropriate vehicle components.

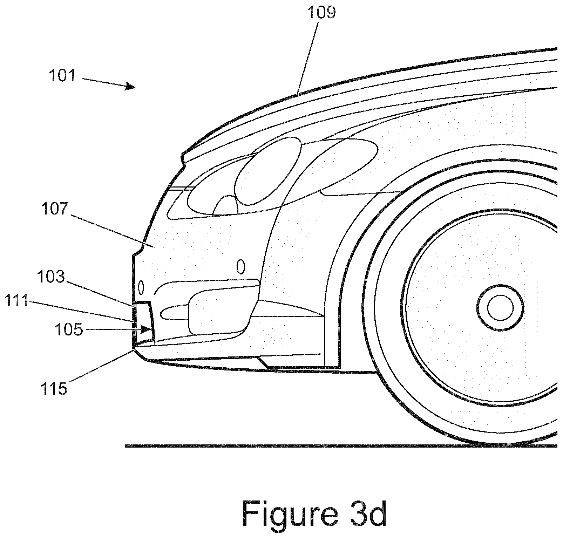

Figure 3d shows a cross-sectional side view of the vehicle 101 when the closure panel 103 is located in the deployed position. The closure panel 103 substantially closes the air inlet 105 so that its front facing surface 111 is flush with at least one surface edge 115 of the front bumper skirt 107. The closure of the air inlet 105 is performed so that the closure panel 103 effectively defines a portion of an outer A-surface of the vehicle 101. The resulting composite surface, formed by the front facing surface 111 of the closure panel 103 and the external surface of the front bumper skirt 107, forms a substantially continuous exterior surface of the vehicle 101.

The operation of the closure panel 103 is similar to that described above with reference to Figures 1a to 3. In particular, the closure panel 103 is operated so that it is moved to a deployed position after a current speed of the vehicle 101 has exceed a predetermined speed threshold and is moved to a retracted position once the current speed of the vehicle 101 has fallen below the predetermined speed threshold.

Embodiments of the present invention as described herein refer to various air inlets 5; 105, which may be opened or closed using various closure panels 3; 103 so as to modify aerodynamic efficiency. Whilst some air inlets may be specifically designed to control aerodynamic efficiency, many of the air inlets 5; 105 may be designed to enable airflow to cool one or more internal components of a vehicle and consequently may be referred to as "cooling air inlets".

It will be appreciated that, whilst embodiments of the present invention have been described with reference to the examples described above, various modifications and alternatives will be apparent. For example, in the above examples described with reference to Figures 1a to 3d, the control mechanism for deployment of the closure panel 3; 103 is dependent on a current speed of the vehicle 1; 101. In other examples, such deployment may alternatively or additionally be dependent on other parameters and criteria. For example, where an air inlet 5; 15 associated with a particular closure panel 3; 103 is configured to control air flow to a heat-sensitive vehicle component such as a radiator or the brakes of the vehicle, the deployment of the closure panel 3; 103 may be temperature dependent. In such cases, it will be appreciated that these heat-sensitive components will have an optimum temperature range within which they may operate at their maximum efficiency. Accordingly, a control loop may be provided such that the closure panel 3; 103 is deployed to restrict airflow when the temperature of the relevant component is below a minimum threshold for optimum functionality (to assist heating of the relevant component), and retracted to encourage airflow when the temperature is above a maximum threshold (to assist cooling of the relevant component). Alternatively or additionally, the control mechanism may be dependent on the vehicle's mode of operation. For example, a manual operation may be performed by a user of the vehicle such that they may select an option (via a user interface of the vehicle) so as to indicate that the one or more closure panels 3; 103 should be deployed. Alternatively, the control mechanism may be dependent on a selected driving mode of the vehicle 1, such as one or more of the following: SPORT, DYNAMIC, ROAD, ECONOMY and OFF-ROAD. In some instances, a single speed and/or temperature threshold is used to signal deployment or retraction, however, in other examples, an upper threshold and lower threshold may be used for reasons of hysteresis (i.e. to prevent a current speed or temperature that fluctuates around the predetermined threshold from causing an excess of control signals to deploy and retract the closure panel).

The external surface of the vehicle 1; 101 is typically painted. The continuous outer surface 11; 111 of the closure panel 3; 103 may have a painted finish which matches, or contrasts with, the painted external surface of the vehicle 1; 101.

Although the above examples described with reference to Figures 1a to 3 provide examples of a single closure panel being used in association with a single air inlet, it will be appreciated that multiple closure panels may be used to cover multiple air inlets, respectively. In such a case, each closure panel may be separately controlled by the control system 50.

Embodiments of the present invention also relate to using an airflow modification device in the form of an aerofoil 201 (airfoil) to control air flow around a motor vehicle such as the motor vehicles 1; 101 depicted in Figures 1a, 1b and 3a to 3d.

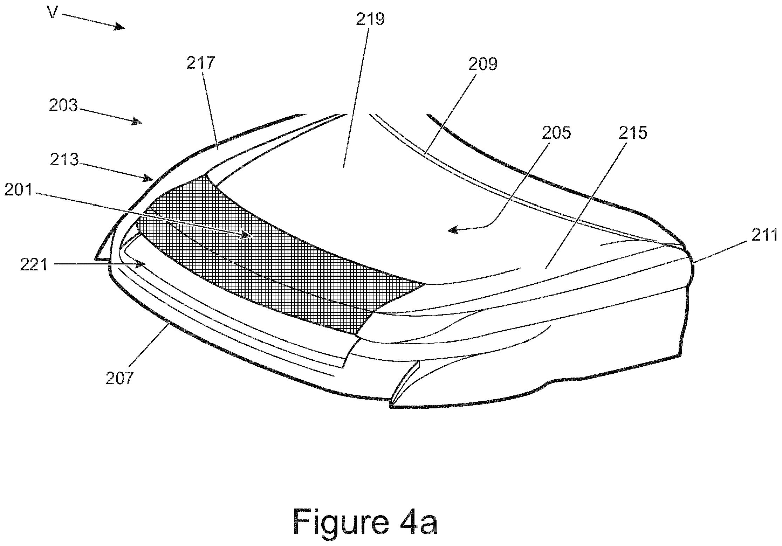

Figure 4a is a schematic front perspective view of a vehicle bonnet 203 having a recessed channel 205 in a longitudinal direction (in a direction along the X-axis) of a vehicle V. The bonnet 203 is formed from a continuous, uninterrupted surface that extends from a front (leading) edge 207 (at a front of a vehicle) towards a rear (trailing) edge 209. The front edge 207 is proximal to a top edge of a front bumper (not shown) of the vehicle. The rear edge 209 is proximal to a windscreen (not shown) of the vehicle. The front edge 207 and the rear edge 209 of the bonnet 203 are joined by a left side edge 211 and a right side edge 213. The side edges 211, 213 are disposed proximal to top side edges (not shown) of the front bumper. The bonnet 203 acts as a cover for a vehicle engine bay such as that discussed herein with reference to Figures 1a to 3d. The bonnet 203 in this example has a "clamshell" configuration, whereby the front edge 207 and the left and right side edges 211, 213 of the bonnet 203 curve and extend around the vehicle to partially define the front and sides of the vehicle.

The bonnet 203 may comprise a hinge element, such as a hinge or a connector to connect to a hinge, for connection to the vehicle.

The recessed channel 205 is formed such that the recess has a maximum depth at the front edge 207 of the bonnet 203 and decreases in height extends towards the rear edge 209 of the bonnet 203. First and second side portions 215, 217 are thereby formed on either side of the channel 205.

The channel 205 comprises a guide surface 219 (i.e. the surface between the left and right side edges 211, 213). The guide surface 219 acts to direct air flow over the bonnet 203 and towards the top of the windscreen (not shown) of the vehicle as the vehicle is travelling in a forward direction. In the present embodiment the guide surface 219 is continuous and uninterrupted and is formed without air inlets or apertures.

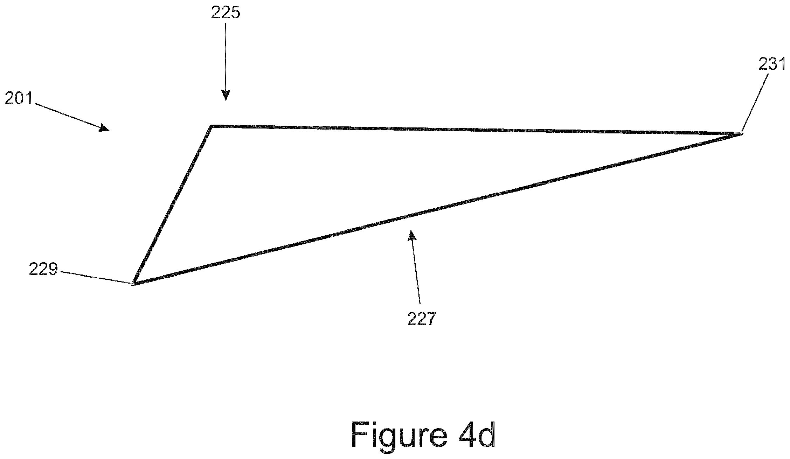

An aerofoil 201 is disposed at the front of the bonnet 203 and extends transversely between the side portions 215, 217. More particularly, the aerofoil 201 is spaced above the guide surface 219 of the bonnet 203 at a predefined height so that there is a through-gap between the aerofoil 201 and the guide surface 219 of the bonnet 203, thereby forming a horizontal passage 221 to allow airflow through to the recessed channel 205. The aerofoil 201 is secured in position by the side portions 215, 217 via securing or fixing means (not shown). The aerofoil 201 is described in greater detail below with reference to Figure 4d.

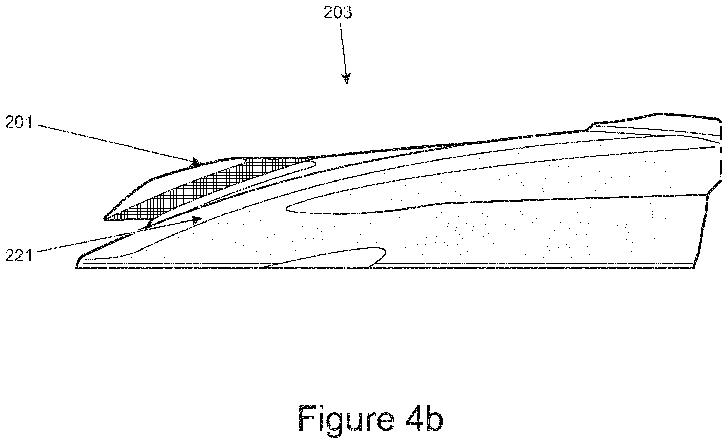

Figure 4b shows a cross-sectional side view of the bonnet 203 and aerofoil 201 of Figure 4a.

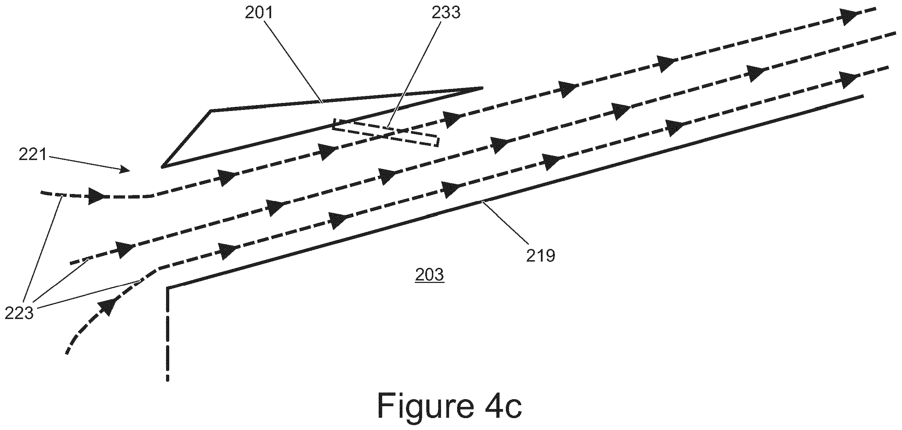

Figure 4c is a simplified schematic diagram showing a cross-sectional side view of the aerofoil 201 and bonnet 203 of Figures 4a and 4b, with arrows 223 depicting fluid flow over the guide surface 219 of the bonnet 203 as the vehicle is travelling in a forward direction.

The aerofoil 201 controls the airflow so that the flow of air travels through the horizontal passage 221 and along the recessed channel 205, substantially parallel to the guide surface 219 with minimal disturbance compared with the airflow if no aerofoil 201 were present. The aerofoil 201 thus acts to guide or channel the airflow over and around the top of the vehicle. At least in certain embodiments, this arrangement can improve vehicle efficiency.

Figure 4d is a simplified schematic diagram showing a cross-sectional side view of the aerofoil 201 in further detail. The aerofoil 201 is constructed with an upper surface 225 and a lower surface 227, which upper and lower surfaces 225, 227 meet to form a leading edge 229 and a trailing edge 231. The leading edge 229 acts to channel airflow above and below the aerofoil 201 as the vehicle is travelling. In this regard, the position and angle of the aerofoil 201, and indeed the shape and dimensions of the aerofoil 201 are constructed and arranged to streamline the vehicle. It will be understood that these parameters (position, angle, shape, dimensions, etc.) of the aerofoil 201 will vary according to the design of the vehicle.

A first vertical separation distance is defined between the leading edge 229 and the guide surface 219 and a second vertical separation distance is defined between the trailing edge 231 and the guide surface 219. In the present embodiment, the lower surface 227 of the aerofoil 201 is arranged substantially parallel to the guide surface 219 such that the first and second vertical separation distances are substantially equal. In other examples, the second separation distance may be greater than the first separation distance so as to decelerate airflow over the guide surface 219. In other examples, the second separation distance may be smaller than the first separation distance so as to accelerate airflow over the guide surface 219. The aerofoil 201 and the recessed channel 205 can be viewed as forming a conduit which is open at each end (i.e. at the front and back). In a first configuration, not part of the claimed invention, the conduit can converge as it extends towards the rear of the bonnet. In a second configuration, the conduit can diverge as it extends towards the rear of the bonnet.

In the example described above with reference to Figures 4a to 4b, a bonnet 203 is provided having a continuous, uninterrupted surface. In this regard, there are no air inlets or apertures provided on the bonnet 203 or at least along the guide surface 219 of the bonnet 203 such that cooling air is not provided to the engine bay through the bonnet 203. Therefore, separate flow paths are provided around the vehicle for such cooling functionality, such as via the air inlets 5; 105 described with reference to Figures 1a, 1b and 3a to 3d.

It will be appreciated that, whilst embodiments of the present invention have been described above with reference to Figures 4a to 4d, various modifications and alternatives will be apparent. For example, in the above examples described with reference to Figures 4a to 4d, the aerofoil 201 has a fixed structure. In other examples, the aerofoil 201 may additionally comprise moving parts. For example, the trailing edge 231 of the aerofoil 201 may comprise one or more movable flaps with an adjustable angle (with respect to a horizontal plane) to enable control of aerodynamic lift. The angle of the flaps may be dynamically adjusted dependent on a current speed of the vehicle so as to maximise the aerodynamic efficiency of the vehicle and minimise resistance to airflow over the guide surface 219 of the bonnet 203.

In the above examples described with reference to Figures 4a to 4d, an aerofoil 201 is used to channel airflow over the guide surface 219. However, it will be appreciated that in other examples a different element or airflow modification device may be used, having a shape other than the aerofoil 201 shown, in order to channel airflow over the guide surface 219.

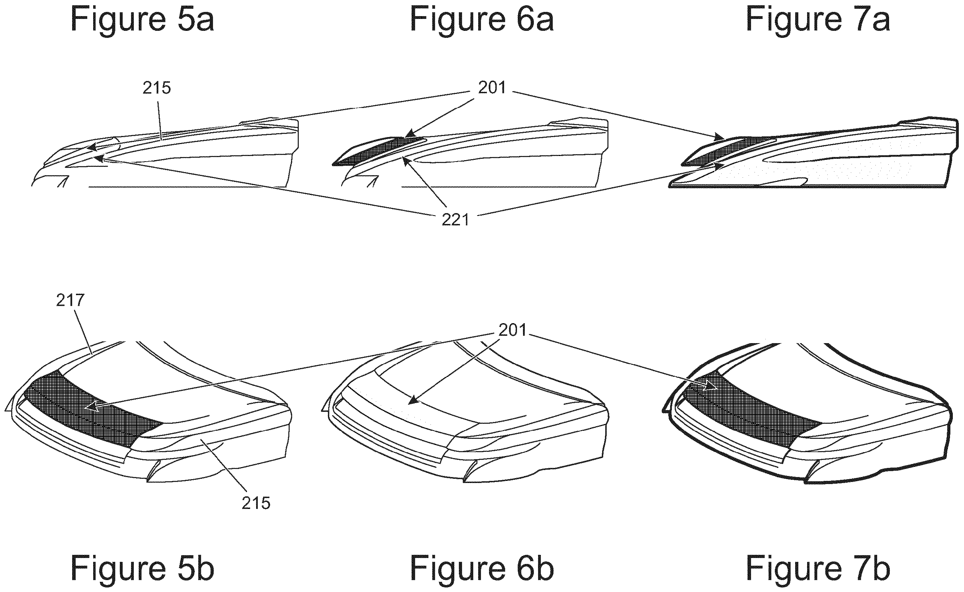

It will be appreciated that the positioning of the aerofoil 201 along the bonnet 203 may vary according to characteristics and design of the relevant vehicle. Figures 5a to 7b illustrate examples of varying aerofoil 201 positions along the bonnet 203. In particular, Figures 5a and 5b show the aerofoil 201 being positioned so as to follow the contour of the side portions 215, 217 as viewed from the side of the vehicle. Figures 6a and 6b show the aerofoil 201 being placed to protrude beyond the front of the vehicle. Figures 7a and 7b show the aerofoil being set back from the front of the vehicle.

A further modification would be to dispose a control element 233, such as a flap or spoiler, on the aerofoil 201 or in the recessed channel 205 in the bonnet 203. By way of example, a control element 233 is shown in phantom in the schematic representation of the bonnet 203 shown in Figure 4c. The control element 233 could be fixedly mounted. Alternatively, the control element 233 can be movably mounted. For example, the control element 233 could be selectively deployed into the conduit formed by the aerofoil 201 and the recessed channel 205.

In some, but not necessarily all examples, the aerofoil 201 and/or at least a portion of the bonnet 203 is movable in dependence on a control signal to change the cross-sectional area of the conduit.

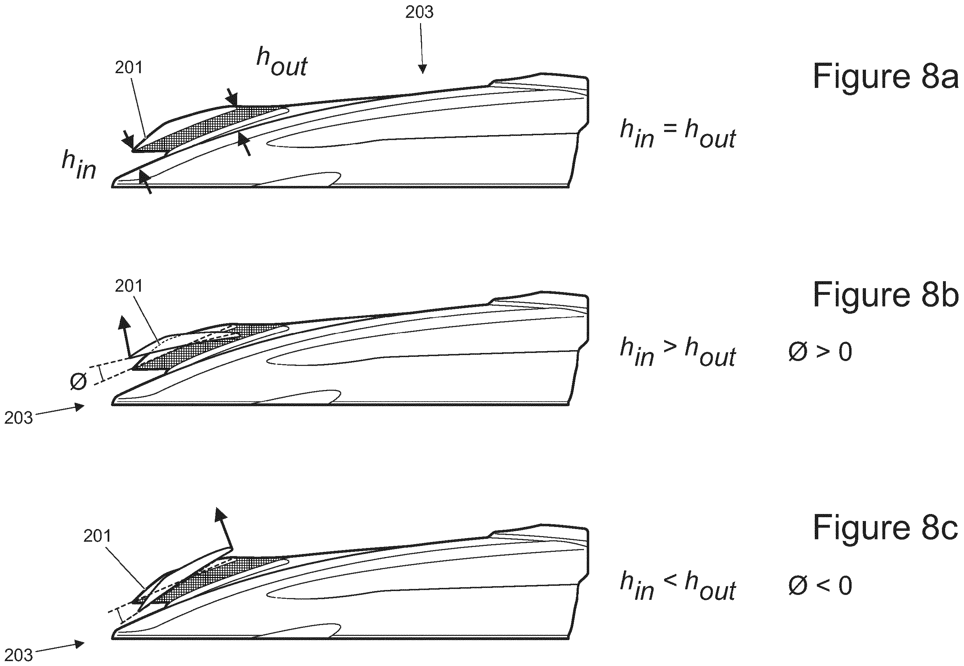

Figures 8a to 8c show examples of movement of a movable aerofoil 201. Figure 8a shows the aerofoil 201 in a first configuration, not part of the claimed invention. In the example, the inlet width hin is equal to the outlet width hₒᵤₜ. An angle Ø may be defined relative to a plane passing from the outlet to the inlet, such that the angle Ø is zero when the aerofoil 201 is in the first configuration.

Figure 8b shows a second configuration, not part of the claimed invention, in which the inlet width hin exceeds outlet width hₒᵤₜ. This means that the angle Ø is greater than 0. In the example, the conduit is converging towards the rear edge of the bonnet.

Figure 8c shows a third configuration in which the inlet width hin is less than outlet width hₒᵤₜ. This means that the angle Ø is less than zero. In the example, the conduit is diverging towards the rear edge of the bonnet 203.

The vehicle may comprise control means. The type of control means is as described herein in relation to control means and control unit 55. The control means may be configured to transmit a control signal to cause one or more actuators to selectively deploy the control element 233 or the aerofoil 201 and/or the at least a portion of the bonnet 203 to change the cross-sectional area of the conduit. The type of actuators may be as described herein in relation to the actuators 60.

The control signal may be transmitted in dependence on at least one operating parameter of the vehicle 1, 101. Example operating parameters may include: the speed of the vehicle 1, 101; a selected predefined vehicle dynamic mode, for example a Track or Sport dynamic mode.

Various closure panels and aerofoils have been described herein. Such elements may be constructed using materials common to vehicle construction such as alloys, aluminium, plastics, fibreglass and other such composite materials.

The embodiment(s) described herein refer to a vehicle comprising two doors (excluding the tailgate or boot lid), but the vehicle could have a four door configuration (excluding the tailgate or boot). For example, the vehicle could be a saloon (sedan) or a sports utility vehicle. It will be appreciated that aspects of the present invention(s) could be applied to other vehicle configurations. For example, the vehicle could be an estate car (station wagon), hatch-back, coupe, off-road vehicle or a sports utility vehicle. Furthermore, the invention(s) described herein are not limited to motor vehicles. The vehicle can be an automobile, a truck, a lorry, an articulated vehicle and so on.

The present disclosure describes positioning adjacent panels to form a substantially continuous exterior surface. It will be appreciated that this is subject to usual manufacturing clearances and tolerances for exterior panels. A shut line (or cut line) is formed between adjacent panels where one (or both) of the panels is movable. The shut line comprises a clearance gap to accommodate relative movement of the panels. The outer surfaces of the panels on each side of the shut line are aligned with each other to form the substantially continuous exterior surface described herein. Thus, the composite exterior surface (defined by two or more panels) is substantially continuous insofar as it is free from steps or offsets at the interface between the panels. By way of example, the substantially continuous exterior surface can comprise a continuous curved surface (formed in 2-dimensions or 3-dimensions) and/or a continuous planar surface.

## Claims

1. A bonnet (203) for a vehicle, the bonnet (203) comprising:
a front edge (207) and a rear edge (209);
a recessed longitudinal channel (205) being formed in said bonnet (203) and extending from said front edge (207) towards the rear edge (209); and
an airflow modification device (201) disposed transversely across the longitudinal channel (205) for controlling airflow over the bonnet (203), wherein the airflow modification device(205) and the recessed channel (205) form a conduit, the conduit having a cross-sectional area which is diverging as the conduit extends towards the rear edge (209).

2. A bonnet (203) as claimed in claim 1, wherein a flap and/or the airflow modification device and/or at least a portion of the bonnet is movable to change the cross-sectional area.

3. A bonnet (203) as claimed in claim 2, wherein the flap and/or the airflow modification device and/or the at least a portion of the bonnet is movable by one or more actuators.

4. A bonnet (203) as claimed in claim 2 or 3, wherein the flap and/or the airflow modification device and/or the at least a portion of the bonnet is movable between an un-deployed configuration and at least one deployed configuration.

5. A bonnet (203) as claimed in any one of the preceding claims, wherein the longitudinal channel has a front section and a rear section; wherein the airflow modification device (201) is disposed transversely across said front section of the longitudinal channel.

6. A bonnet (203) as claimed in claim 5, wherein at least said front section comprises a substantially continuous surface for guiding airflow over the bonnet.

7. A bonnet (203) as claimed in any one of the preceding claims, comprising left (215) and right (217) side portions which define the respective sides of the bonnet (203), wherein the airflow modification device (201) extends between said left and right side portions.

8. A bonnet (203) as claimed in any one of the preceding claims, wherein the airflow modification device (201) comprises one or more flaps, the flaps being either fixed at a predefined angle relative to a horizontal plane, or being movable relative to a horizontal plane.

9. A bonnet (203) as claimed in any one of the preceding claims, wherein the airflow modification device (201) comprises an aerofoil.

10. A bonnet (203) as claimed in any one of the preceding claims, wherein the bonnet comprises a hinge element.

11. A vehicle comprising a bonnet (203) as claimed in any one of the preceding claims.

12. A control unit for a vehicle, configured to transmit a control signal in dependence on at least one operating parameter of the vehicle to cause, at least in part, the movement of the flap and/or the airflow modification device and/or the at least a portion of the bonnet as claimed in claim 2.

## Patentansprüche

1. Haube (203) für ein Fahrzeug, die Haube (203) umfassend:
eine Vorderkante (207) und eine Hinterkante (209);
einen vertieften Längskanal (205), der in der Haube (203) ausgebildet ist und sich von der Vorderkante (207) in Richtung der Hinterkante (209) erstreckt; und
eine Luftstrommodifikationsvorrichtung (201), die quer über dem Längskanal (205) zum Steuern des Luftstroms über der Haube (203) angeordnet ist, wobei die Luftstrommodifikationsvorrichtung (205) und der vertiefte Kanal (205) eine Leitung ausbilden, wobei die Leitung einen Querschnittsbereich aufweist, der divergierend ist, während sich die Leitung in Richtung der Hinterkante (209) erstreckt.

2. Haube (203) nach Anspruch 1, wobei eine Klappe und/oder die Luftstrommodifikationsvorrichtung und/oder mindestens ein Abschnitt der Haube beweglich ist, um den Querschnittsbereich zu ändern.

3. Haube (203) nach Anspruch 2, wobei die Klappe und/oder die Luftstrommodifikationsvorrichtung und/oder der mindestens eine Abschnitt der Haube durch einen oder mehrere Aktuatoren beweglich ist.

4. Haube (203) nach Anspruch 2 oder 3, wobei die Klappe und/oder die Luftstrommodifikationsvorrichtung und/oder der mindestens eine Abschnitt der Haube zwischen einer nicht entfalteten Konfiguration und mindestens einer entfalteten Konfiguration beweglich ist.

5. Haube (203) nach einem der vorstehenden Ansprüche, wobei der Längskanal einen vorderen Teil und einen hinteren Teil aufweist; wobei die Luftstrommodifikationsvorrichtung (201) quer über dem vorderen Teil des Längskanals angeordnet ist.

6. Haube (203) nach Anspruch 5, wobei mindestens der vordere Teil eine im Wesentlichen fortlaufende Oberfläche zum Leiten von Luftstrom über die Haube umfasst.

7. Haube (203) nach einem der vorstehenden Ansprüche, umfassend einen linken (215) und einen rechten (217) Seitenabschnitt, die die jeweiligen Seiten der Haube (203) definieren, wobei sich die Luftstrommodifikationsvorrichtung (201) zwischen dem linken und dem rechten Seitenabschnitt erstreckt.

8. Haube (203) nach einem der vorstehenden Ansprüche, wobei die Luftstrommodifikationsvorrichtung (201) eine oder mehrere Klappen umfasst, wobei die Klappen entweder in einem vordefinierten Winkel relativ zu einer horizontalen Ebene fixiert sind oder relativ zu einer horizontalen Ebene beweglich sind.

9. Haube (203) nach einem der vorstehenden Ansprüche, wobei die Luftstrommodifikationsvorrichtung (201) eine aerodynamische Fläche umfasst.

10. Haube (203) nach einem der vorstehenden Ansprüche, wobei die Haube ein Scharnierelement umfasst.

11. Fahrzeug, umfassend eine Haube (203) nach einem der vorstehenden Ansprüche.

12. Steuereinheit für ein Fahrzeug, die konfiguriert ist, um ein Steuersignal in Abhängigkeit von mindestens einem Betriebsparameter des Fahrzeugs zu übertragen, um mindestens teilweise die Bewegung der Klappe und/oder der Luftstrommodifikationsvorrichtung und/oder des mindestens einen Abschnitts der Haube nach Anspruch 2 zu veranlassen.

## Revendications

1. Capot (203) destiné à un véhicule, le capot (203) comprenant :
un bord avant (207) et un bord arrière (209) ;
un canal longitudinal évidé (205) formé dans ledit capot (203) et s'étendant depuis ledit bord avant (207) vers le bord arrière (209) ; et
un dispositif de modification d'écoulement d'air (201) disposé transversalement à travers le canal longitudinal (205) pour commander l'écoulement d'air sur le capot (203), le dispositif de modification d'écoulement d'air (205) et le canal évidé (205) formant un conduit, le conduit ayant une zone transversale qui est divergente lorsque le conduit s'étend vers le bord arrière (209).

2. Capot (203) selon la revendication 1, un volet et/ou le dispositif de modification d'écoulement d'air et/ou au moins une partie du capot étant mobiles pour modifier la zone transversale.

3. Capot (203) selon la revendication 2, le volet et/ou le dispositif de modification d'écoulement d'air et/ou l'au moins une partie du capot état mobiles par un ou plusieurs actionneurs.

4. Capot (203) selon la revendication 2 ou 3, le volet et/ou le dispositif de modification d'écoulement d'air et/ou l'au moins une partie du capot étant mobiles entre une configuration non déployée et au moins une configuration déployée.

5. Capot (203) selon l'une quelconque des revendications précédentes, le canal longitudinal étant pourvu d'une section avant et d'une section arrière ; le dispositif de modification d'écoulement d'air (201) étant disposé transversalement à travers ladite section avant du canal longitudinal.

6. Capot (203) selon la revendication 5, au moins ladite section avant comprenant une surface sensiblement continue pour guider l'écoulement d'air sur le capot.

7. Capot (203) selon l'une quelconque des revendications précédentes, comprenant des parties latérales gauche (215) et droite (217) qui définissent les côtés respectifs du capot (203), le dispositif de modification d'écoulement d'air (201) s'étendant entre lesdites parties latérales gauche et droite.

8. Capot (203) selon l'une quelconque des revendications précédentes, le dispositif de modification d'écoulement d'air (201) comprenant un ou plusieurs volets, les volets étant soit fixés selon un angle prédéfini par rapport à un plan horizontal, soit mobiles par rapport à un plan horizontal.

9. Capot (203) selon l'une quelconque des revendications précédentes, le dispositif de modification d'écoulement d'air (201) comprenant une surface portante.

10. Capot (203) selon l'une quelconque des revendications précédentes, le capot comprenant un élément d'articulation.

11. Véhicule comprenant un capot (203) selon l'une quelconque des revendications précédentes.

12. Unité de commande pour un véhicule, configurée pour transmettre un signal de commande en fonction d'au moins un paramètre de fonctionnement du véhicule pour provoquer, au moins en partie, le mouvement du volet et/ou du dispositif de modification d'écoulement d'air et/ou de l'au moins une partie du capot selon la revendication 2.
